# FASCICULE DE BREVET EUROPEEN

(11) **EP 1 282 536 B1**
(45) Date de publication et mention de la délivrance du brevet: **09.04.2008**
(21) Numéro de dépôt: 01928028.8
(22) Date de dépôt: 20.04.2001
(51) Int. Cl.: B60J 7/14

(54) **SYSTEME DE TOIT RIGIDE ESCAMOTABLE POUR VEHICULE DECOUVRABLE**
VERSENKBARES STARRES DACHSYSTEM FÜR CABRIOFAHRZEUG
RETRACTABLE HARD TOP SYSTEM FOR CONVERTIBLE CAR

(30) Priorité: 09.05.2000 FR 0005879
(43) Date de publication de la demande: 12.02.2003
(73) Titulaire: Société Européenne de Brevets Automobiles, 75011 Paris 11 (FR)
(72) Inventeur: GUILLEZ, Jean-Marc, F-79140 Cerizay (FR); QUEVEAU, Paul, F-79140 Cerizay (FR); QUEVEAU, Gérard, F-79140 Cerizay (FR)
(74) Mandataire: Rémont, Claude
(86) Numéro de dépôt international: PCT/FR2001/001231
(87) Numéro de publication internationale: WO 2001/085480

(56) Documents cités:
- EP-A- 0 554 694
- DE-A- 19 803 883
- DE-C- 4 326 255
- FR-A- 2 694 245
- FR-A- 2 801 538

## Description

La présente invention concerne un système de toit rigide escamotable pour véhicule découvrable.

Dans FR-A-2694245, est divulgué un tel système de toit rigide escamotable du type comportant :
- un élément de toit arrière monté, sur le châssis du véhicule, par l'intermédiaire de moyens de guidage agencés de manière telle que l'élément de toit arrière (1) peut s'escamoter vers le coffre arrière dudit véhicule selon un mouvement général de pivotement à partir de sa position fermée au-dessus de l'habitacle, ce pivotement étant, dans une première étape, de l'avant vers l'arrière, puis, dans une seconde étape, de l'arrière vers l'avant jusqu'à la position escamotée dans laquelle ledit élément de toit arrière se trouve rangé en position sensiblement horizontale, sa concavité étant tournée vers le bas,
- et au moins un premier élément de toit avant articulé par rapport audit élément de toit arrière,
- et des moyens de commande du pivotement de ce premier élément de toit avant par rapport à l'élément de toit arrière.

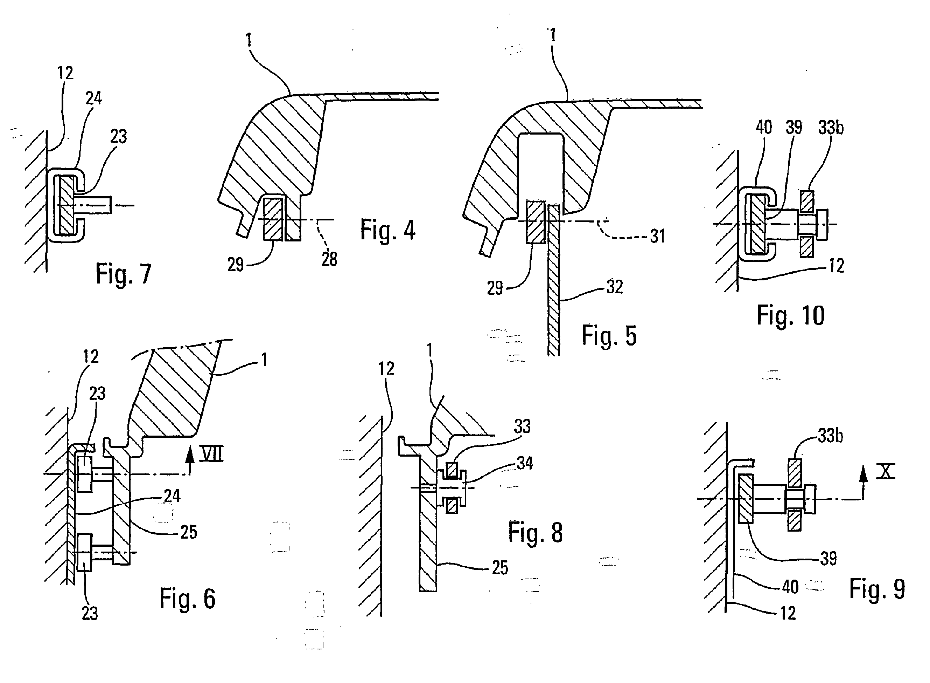

Dans EP-A-0554694, un coffre arrière peut être utilisé comme espace de rangement d'un toit rigide escamotable et de son mécanisme (voir figures 9,3 et 17).

On connaît, aussi, par la demande de brevet français 99 15 106 (FR-A-2801538), un système de toit rigide escamotable comparable.

La première étape de pivotement de l'avant vers l'arrière permet notamment d'éloigner l'élément de toit arrière pour libérer l'ouverture correspondante afin de permettre l'escamotage d'autres éléments du toit dans le coffre arrière du véhicule.

Dans l'exemple décrit, l'élément de toit arrière pivote autour de deux pivots situés respectivement sur les parois latérales du véhicule sur un même axe de pivotement.

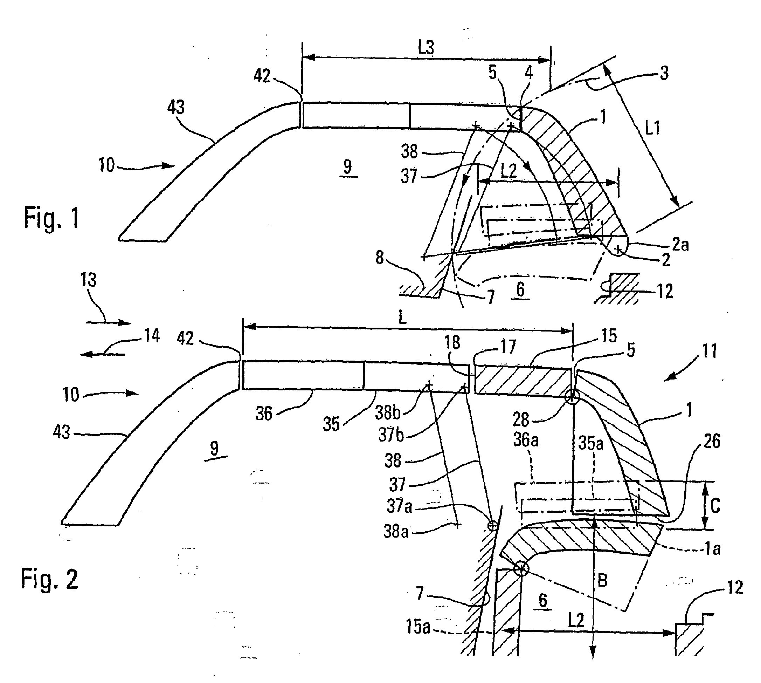

Comme schématisé à la figure 1, un élément de toit arrière 1 pivotant autour de son axe de pivotement 2 a une longueur L1, mesurée dans le plan de la figure, qui correspond au rayon de la circonférence 3 décrite par l'arête supérieure 4 du bord avant 5 dudit élément de toit arrière 1.

Pour loger l'élément de toit arrière 1 à l'intérieur du coffre arrière 6, il est nécessaire que l'espace disponible, schématisé par L2, entre l'axe de pivotement 2 et la face arrière 7 du siège arrière 8 soit supérieur à la longueur L1.

Il faut également tenir compte de la longueur L3, qui est représentative de la longueur disponible pour les passagers à l'intérieur de l'habitacle 9 du véhicule 10 et qui doit être recouverte par d'autres éléments de toit qu'il faut également loger dans l'espace L2.

Le but de la présente invention est de remédier aux inconvénients de ces systèmes connus et de proposer un système de toit rigide escamotable du type précité donnant au concepteur d'un véhicule une très grande liberté de manoeuvre pour adapter un système de toit rigide escamotable sur un véhicule d'un type donné quelconque.
Suivant l'invention, ce but est atteint par un système de toit rigide escamotable selon la revendication 1.

Il est ainsi possible de choisir les dimensions respectives de l'élément de toit arrière et du premier élément de toit avant en fonction des dimensions du coffre arrière du véhicule dans les directions verticale et longitudinale.

Un tel système peut également être installé sur un véhicule de longueur relativement grande, puisque ce système permet de ranger le premier élément de toit avant dans une position relativement peu gênante, ce qui simplifie le problème consistant à ranger en outre dans le coffre arrière d'autres éléments de toit avant éventuels.

Des réalisations avantageuses de l'invention sont données dans les revendications dépendantes.

D'autres caractéristiques et avantages de la présente invention apparaîtront dans la description détaillée ci-après.

Aux dessins annexés donnés uniquement à titre d'exemples non limitatifs :
- la figure 1 est une vue schématique en coupe longitudinale d'un véhicule comportant un système de toit rigide escamotable selon un art antérieur connu ;
- la figure 2 est une vue semblable à la figure 1 représentant un mode de réalisation de la présente invention ;
- la figure 3 est une vue agrandie d'un détail de la figure 2 ;
- la figure 4 est une vue partielle agrandie en coupe selon IV-IV à la figure 3 ;
- la figure 5 est une vue partielle agrandie en coupe selon V-V à la figure 3 ;
- la figure 6 est une vue partielle agrandie en coupe selon VI-VI à la figure 3 ;
- la figure 7 est une vue partielle en coupe selon VII-VII à la figure 6 ;
- la figure 8 est une vue partielle agrandie en coupe selon VIII-VIII à la figure 3 ;
- la figure 9 est une vue partielle agrandie en coupe selon IX-IX à la figure 3 ;
- la figure 10 est une vue partielle en coupe selon X-X à la figure 9 ;
- la figure 11 est une vue schématique semblable à la figure 3 d'un autre mode de réalisation de la présente invention ;
- la figure 12 est une vue semblable à la figure 3 d'un autre mode de réalisation de la présente invention ;
- les figures 13, 14 et 15 sont des vues agrandies d'un détail de la figure 3 représentant, à titre d'exemples, trois modes de réalisation différents de moyens d'entraînement de l'élément de toit arrière du système selon la présente invention.

On reprendra ci-dessous les numéros de références déjà utilisés plus haut pour l'art antérieur schématisé à la figure 1.

Dans le mode de réalisation représenté aux figures 2 à 10, le système de toit rigide escamotable 11 pour un véhicule 10 découvrable comporte un élément de toit arrière 1 monté sur le châssis 12 du véhicule 10 par l'intermédiaire de moyens de guidage.

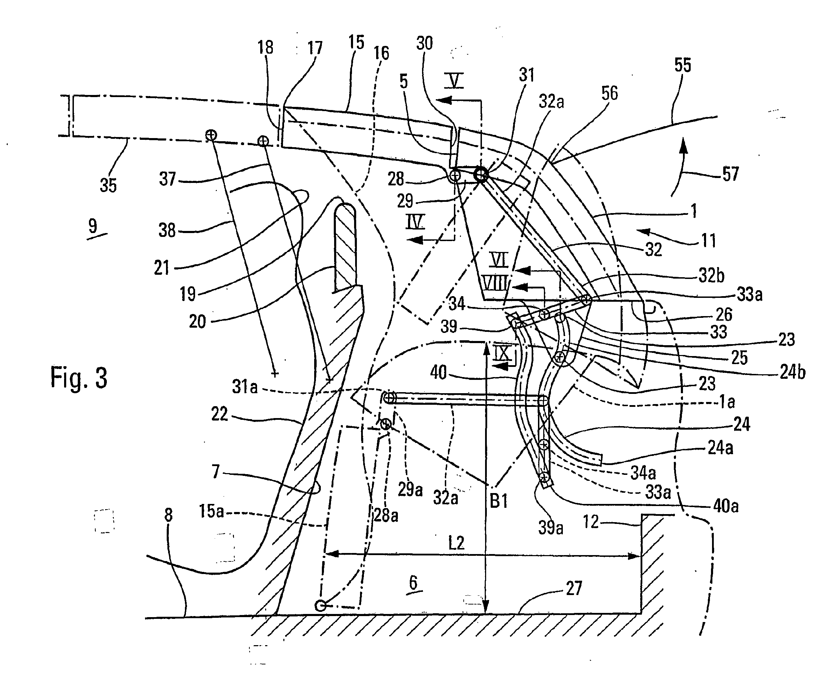

Ces moyens de guidage sont agencés de manière telle que l'élément de toit arrière 1 peut s'escamoter dans le coffre arrière 6 du véhicule 10 selon un mouvement général de pivotement à partir de sa position fermée représentée en traits pleins aux figures 2 et 3.

Ce pivotement est, dans une première étape, de l'avant vers l'arrière, dans le sens de la flèche 13, dans le sens horaire aux figures, puis, dans une seconde étape, de l'arrière vers l'avant selon la flèche 14, dans le sens anti-horaire aux figures 2 et 3, jusqu'à la position escamotée 1a, représentée en tirets aux figures 2 et 3, dans laquelle l'élément de toit arrière 1 se trouve rangé en position sensiblement horizontale, sa concavité étant tournée vers le bas.

Suivant la présente invention, le système 11 comporte en outre au moins un premier élément de toit avant 15 articulé par rapport à l'élément de toit arrière 1, et des moyens de commande du pivotement du premier élément de toit avant 15 par rapport à l'élément de toit arrière 1.

Les moyens de guidage de l'élément de toit arrière et les moyens de commande du premier élément de toit avant 15 sont agencés de manière à guider le premier élément de toit avant 15 le long d'une trajectoire prédéterminée 16 jusqu'à une position escamotée 15a, schématisée en tirets aux figures 2 et 3, dans laquelle le premier élément de toit avant 15 se trouve rangé en position sensiblement verticale derrière la face arrière 7 du siège arrière 8 du véhicule 10.

Comme schématisé à la figure 3, la trajectoire 16 est la trajectoire de l'arête supérieure 17 du bord avant 18 du premier élément de toit avant 15.

Cette trajectoire 16 est prédéterminée de façon à écarter le premier élément de toit avant 15 des joints d'étanchéité (non représentés) sur lesquels il est appliqué dans la position fermée du toit, puis à éviter les obstacles susceptibles de gêner le déplacement de l'arête 17, par exemple le bord supérieur 19 de l'arceau de sécurité 20 pour protéger la tête, schématisée en 21 d'un passager arrière dont la silhouette est schématisée en 22, assis sur le siège arrière 8 du véhicule 10.

La trajectoire 16 est, bien entendu, déterminée de préférence de façon telle que la position escamotée 15a du premier élément de toit avant 15 est aussi proche que possible de la face arrière 7 du siège arrière 8.

L'élément de toit arrière 1 peut être, comme représenté à la figure 1, monté de manière pivotante autour de deux axes de pivotement 2 portés chacun par une patte latérale 2a de l'élément de toit 1 et par la paroi latérale correspondante (non représentée) du châssis 12 du véhicule 10.

Il convient alors de coordonner de manière précise les mouvements de pivotement respectifs de l'élément de toit arrière 1 par rapport au châssis 12 et du premier élément de toit avant 15 par rapport à l'élément de toit arrière 1, de manière à suivre la trajectoire 16.

On peut par exemple commander chacun de ces mouvements de pivotement par un moteur respectif alimenté de manière adéquate.

Dans le mode de réalisation représenté notamment à la figure 3, l'élément de toit arrière 1 porte de chaque côté du véhicule 10 deux galets 23 pivotants montés de manière coulissante dans une même glissière 24 ménagée dans la paroi latérale correspondante du véhicule dans un plan vertical longitudinal de celui-ci (voir figures 6 et 7).

Chaque glissière 24 a, à partir de son extrémité 24b correspondant à la position fermée de l'élément de toit arrière 1, l'extrémité supérieure dans l'exemple de la figure 3, sa concavité tournée vers l'intérieur du véhicule 10, vers l'avant, c'-est-à-dire vers la gauche à la figure, pour commander le pivotement vers l'arrière dudit élément de toit arrière 1 dans la première étape de son pivotement.

Chaque glissière 24 a également, à partir de son extrémité 24a correspondant à la position escamotée la de l'élément de toit arrière 1, sa concavité tournée vers l'extérieur du véhicule 10, vers l'arrière et vers la droite à la figure 3, pour le pivotement vers l'avant dudit élément de toit arrière 1 dans la deuxième étape de son pivotement.

Chaque glissière 24 a ainsi une forme sensiblement en S.

Les deux galets 23 d'un même côté d'un véhicule sont portés par une saillie 25 s'étendant vers le bas à partir du bord inférieur 26 de l'élément de toit arrière 1 (voir figure 6).

Le coulissement des deux galets 23 dans la même glissière 24 a pour résultat un guidage extrêmement précis du mouvement de pivotement de l'élément de toit arrière 1.

Ce mode de réalisation permet de faire en sorte que, dans sa position escamotée 1a, l'élément de toit arrière 1 se trouve à une hauteur maximale B1 au-dessus du plancher 27 du coffre arrière 6, inférieure à la hauteur B (voir figure 2) du bord inférieur 26 de l'élément de toit arrière 1 dans la position fermée de celui-ci. On verra plus loin l'avantage présenté par cette caractéristique.

Le premier élément de toit avant 15 est articulé de chaque côté du véhicule sur l'élément de toit arrière 1 selon un premier axe d'articulation 28 situé près du bord avant 5 de l'élément de toit arrière 1 et porté par un doigt 29 en saillie vers l'arrière du véhicule 10 par rapport au bord arrière 30 de l'élément de toit avant 15 (voir figures 4 et 5).

Chaque doigt 29 se prolonge vers l'arrière au-delà dudit premier axe d'articulation 28 jusqu'à une extrémité arrière portant un second axe d'articulation 31 pour articuler le doigt 29 à l'extrémité supérieure 32a d'un levier de commande 32.

L'extrémité inférieure 32b de chaque levier de commande 32 est articulée à une première extrémité 33a d'un bras pivotant 33 monté de manière pivotante dans sa partie médiane autour d'un pivot 34 porté par l'élément de toit arrière 1, dans l'exemple représenté par la saillie correspondante 25 de l'élément de toit arrière 1 (voir figure 8).

La seconde extrémité 33b de chaque bras pivotant 33 porte un galet 39 coulissant dans une seconde glissière 40 portée par le châssis 12 du véhicule 10 (voir figures 9 et 10).

Le système de toit ouvrant escamotable de la figure 3 comporte en outre, comme celui représenté à la figure 1, au moins un second élément de toit avant 35 situé, dans la position fermée du toit, en avant du premier élément de toit avant 15, et même, dans l'exemple représenté, un troisième élément de toit avant 36 situé en avant du second élément de toit avant 35.

Le système 11 comporte bien entendu des moyens pour déplacer le second élément de toit avant 35 de sa position fermée, représentée en traits pleins aux figures 1 et 2, à sa position ouverte escamotée 35a dans le coffre arrière 6 du véhicule 10.

Dans l'exemple représenté, le système 11 de toit rigide escamotable comporte deux bras 37, 38 articulés à leur extrémité inférieure respective 37a, 38a, sur le châssis 12 du véhicule, et à leur extrémité supérieure respective 37b, 38b, sur le second élément de toit avant 35, de manière à former un parallélogramme ou un quadrilatère déformable capable de guider le second élément de toit avant 35 jusqu'à sa position escamotée 35a.

Dans cet exemple, le second élément de toit avant 35 est situé, dans sa position escamotée 35a, au-dessus de l'élément de toit arrière 1 placé lui-même dans sa position escamotée la.

Cette disposition, qui est la plus simple à réaliser, n'a toutefois aucun caractère obligatoire.

Le troisième élément de toit avant 36 est, pour sa part, relié au second élément de toit avant 35 par des moyens de guidage connus quelconques, tels que des bras pivotants, ou des glissières coopérant avec des galets ou des biellettes, capables de guider le coulissement du troisième élément de toit avant 36 entre sa position fermée, représentée aux figures 1 et 2, et une position coulissée vers l'arrière, non représentée, dans laquelle il est rendu solidaire du second élément de toit avant 35, au-dessus ou au-dessous de ce dernier, afin de suivre le mouvement dudit second élément de toit avant 35 jusqu'à sa position escamotée 35a.

Comme schématisé à la figure 2, les second et troisième éléments de toit avant 35 et 36 occupent dans leur position escamotée 35a, 36a un encombrement vertical schématisé en C au-dessus de l'élément de toit arrière 1 dans sa position escamotée 1a.

C'est la raison pour laquelle il est particulièrement intéressant de pouvoir minimiser, comme indiqué ci-dessus, la hauteur B1 de façon à faire en sorte que le système de toit, dans sa position escamotée, et compte tenu d'un certain chevauchement entre les distances B1 et C autorisé par la forme courbe des éléments de toit 35, 36 et schématisé à la figure 2, ne dépasse pas sensiblement la hauteur B de la carrosserie du véhicule.

Le mode de réalisation représenté aux figures 1, 2 et 3 correspond à un véhicule du type à deux corps, par exemple du type break ou du type monospace, dans lequel l'élément de toit arrière 1 a, dans sa position fermée, une direction relativement peu éloignée de la verticale.

On voit aux figures que les deux glissières 24 et 40 s'étendent d'une manière générale sensiblement en direction verticale ou dans une direction faisant un angle faible avec la verticale.

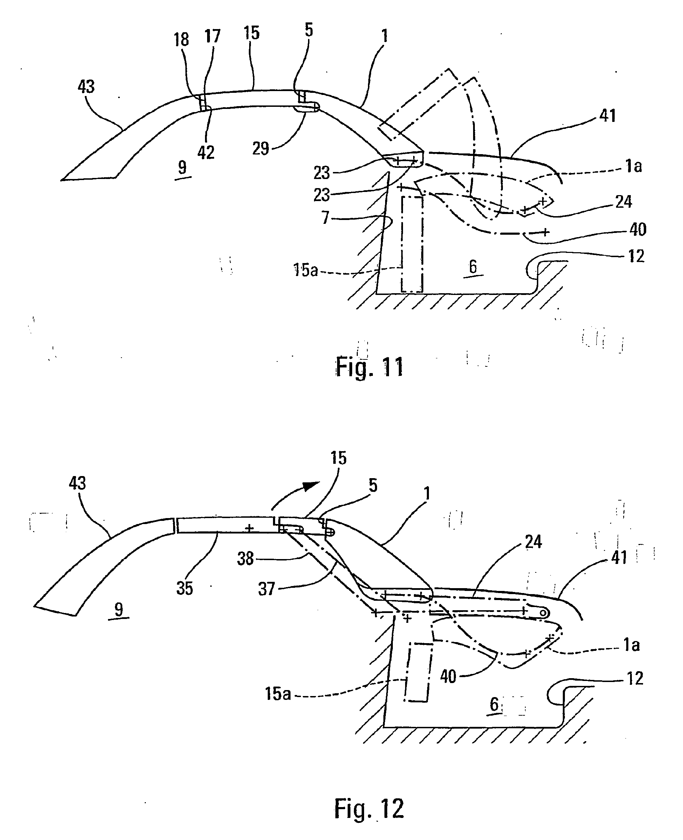

On a représenté aux figures 11 et 12 un mode de réalisation du système de toit ouvrant escamotable selon la présente invention équipant un véhicule du type à trois corps dont le coffre arrière 6 est recouvert par un couvercle 41 s'étendant sensiblement horizontalement.

Le mode de réalisation de la figure 11 comprend un élément de toit arrière 1 et un premier élément de toit avant 15 s'étendant jusqu'au bord arrière supérieur 42 du pare-brise 43. Ces deux éléments peuvent être escamotés dans le coffre arrière 6, respectivement dans des positions sensiblement horizontale et verticale.

Dans le mode de réalisation de la figure 12, le système de toit comprend un élément de toit arrière 1 sur lequel est articulé un premier élément de toit avant 15, et un second élément de toit avant 35 relié par des bras pivotants 37 et 38 au châssis 12 du véhicule, comme décrit ci-dessus.

On voit que, dans ces deux modes de réalisation, les deux glissières 24 et 40 s'étendent d'une manière générale selon une direction faisant un angle limité avec l'horizontale.

On voit également que, dans ces modes de réalisation, chaque glissière 24, 40 a, à partir de son extrémité correspondant à la position fermée du toit, sa concavité tournée vers l'intérieur du véhicule, c'est-à-dire vers le bas aux figures, et, à partir de son extrémité opposée correspondante à la position escamotée du toit, sa concavité tournée vers l'extérieur du véhicule, dans cet exemple vers le haut.

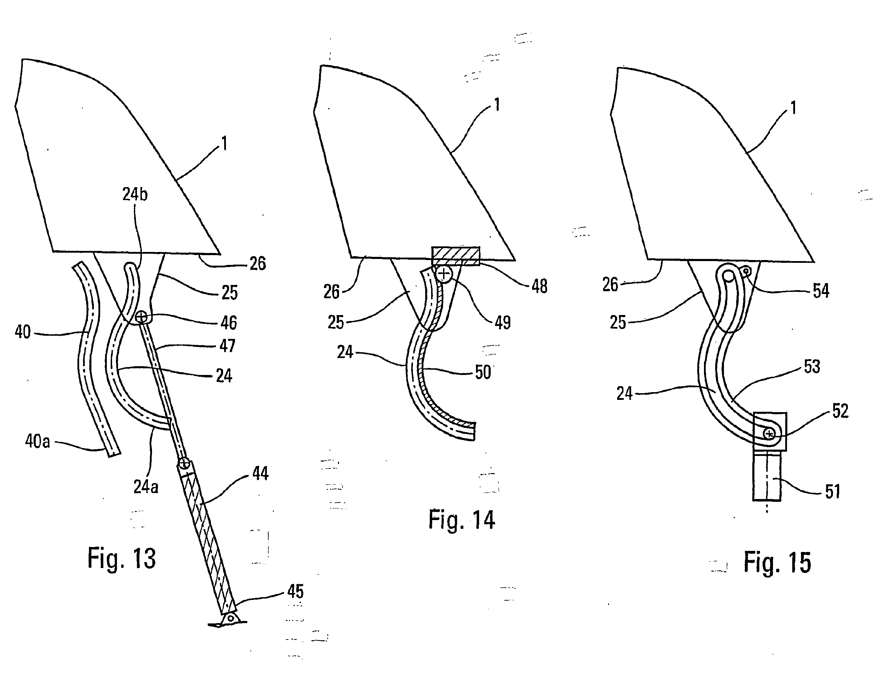

Dans le mode de réalisation représenté à la figure 13, un vérin 44, électrique ou hydraulique, est articulé à son extrémité inférieure 45 sur le châssis 12 du véhicule et à l'extrémité supérieure 46 de sa tige 47 sur la saillie 25 de l'élément de toit arrière 1. Il y a de préférence un vérin 44 de chaque côté du véhicule. Chaque vérin 44 tire l'élément de toit arrière 1 vers le bas pour ouvrir et escamoter le système de toit 11. Chaque vérin 44 pousse l'élément de toit arrière 1 vers le haut pour refermer le système de toit 11.

Dans le mode de réalisation de la figure 14, l'élément de toit arrière 1 porte, de préférence de chaque côté du véhicule, un moteur électrique 48 qui commande un pignon 49 engrenant sur une crémaillère 50 ayant la forme de la glissière 24 correspondante, pour commander le coulissement des galets 23 dans un sens ou dans l'autre le long de la glissière 24 correspondante.

Dans le mode de réalisation de la figure 15, un moteur 51 fixe sur le châssis 12 du véhicule entraîne, par l'intermédiaire d'un pignon 52, une courroie crantée 53 fermée sur elle-même et fixée en 54 sur la saillie 25 correspondante de l'élément de toit arrière 1. La rotation du pignon 52 dans un sens ou dans l'autre commande le déplacement de l'élément de toit arrière 1 dans un sens ou dans l'autre.

Enfin, comme schématisé à la figure 3, l'élément de toit arrière 1 peut comporter une lunette arrière 55 articulée en 56 à sa partie supérieure sur l'élément de toit arrière 1 pour pouvoir s'ouvrir dans le sens de la flèche 57, le sens anti-horaire à la figure, pour ménager une ouverture dans la partie supérieure de l'arrière du véhicule 10 lorsque le système de toit 11 est fermé.

Le fonctionnement du système de toit 11 est simple.

Lors du déplacement de l'élément de toit arrière 1 vers le bas le long de la glissière 24, le bras 33, pivotant autour du pivot 34, entraîne le galet 39 qui coulisse dans la glissière 40 dont la forme impose le déplacement angulaire du bras 33.

Le déplacement angulaire du bras 33 entraîne l'extrémité inférieure 32b du levier 32. Chaque levier 32 commande le mouvement de rotation du premier élément de toit avant 15 par rapport à l'élément de toit arrière 1.

On a ainsi décrit un système de toit rigide escamotable de structure simple et fiable donnant beaucoup de liberté au concepteur d'un véhicule, permettant de loger les éléments de toit à l'intérieur du coffre arrière avec un encombrement limité aussi bien en direction verticale qu'en direction longitudinale, ce système de toit étant adaptable à des véhicules de formes et de dimensions relativement différentes.

Bien entendu, la présente invention n'est pas limitée aux modes de réalisation que l'on vient de décrire, et on peut apporter à ceux-ci de nombreux changements et modifications pour autant que ceux-ci tombent sous l'étendue de protection définie par les revendications.

## Revendications

1. Système de toit rigide escamotable (11) pour véhicule (10) découvrable, ce système (11) comportant :
- un élément de toit arrière (1) monté sur le châssis (12) du véhicule (10) par l'intermédiaire de moyens de guidage (24, 34, 39, 40, 44, 49, 50) agencés de manière telle que l'élément de toit arrière (1) peut s'escamoter dans le coffre arrière (6) dudit véhicule (10) selon un mouvement général de pivotement à partir de sa position fermée au-dessus de l'habitacle, ce pivotement étant, dans une première étape, de l'avant vers l'arrière, puis, dans une seconde étape, de l'arrière vers l'avant jusqu'à la position escamotée (1a) dans laquelle ledit élément de toit arrière (1) se trouve rangé en position sensiblement horizontale, sa concavité étant tournée vers le bas,
- et au moins un premier élément de toit avant (15) articulé par rapport audit élément de toit arrière (1),
- et des moyens (32, 33, 28, 29) de commande du pivotement de ce premier élément de toit avant (15) par rapport à l'élément de toit arrière (1),
**caractérisé en ce que**
- le premier élément de toit avant (15) est articulé sur l'élément de toit arrière (1), et
- les moyens (32, 33, 28, 29) de commande du pivotement du premier élément de toit avant (15) et les moyens (24, 34, 39, 40, 44, 49, 50) de guidage de l'élément de toit arrière (1) sont agencés pour, de façon coordonnée:
- assurer un mouvement du premier élément de toit avant (15), ensemble avec un mouvement de l'élément de toit arrière (1),
- et guider le premier élément de toit avant (15) le long d'une trajectoire prédéterminée (16) jusqu'à une position escamotée (15a) dans laquelle le premier élément de toit avant (15) se trouve rangé en position sensiblement verticale derrière le siège arrière (8) du véhicule (10).

2. Système de toit selon la revendication 1, **caractérisé en ce que** les moyens de guidage de l'élément de toit arrière (1) sont agencés de manière à assurer que, dans la position (1a) escamotée à l'intérieur du coffre arrière (6), cet élément de toit arrière (1) se trouve à une hauteur maximale (B1) au-dessus du plancher (27) du coffre arrière (6), inférieure à la hauteur (B) du bord inférieur (26) dudit élément de toit arrière lorsqu'il est dans sa position fermée.

3. Système de toit selon l'une des revendications 1 ou 2, **caractérisé en ce que** l'élément de toit arrière (1) porte de chaque côté du véhicule deux galets (23) montés de manière coulissante dans une même glissière (24) qui a, à partir de son extrémité (24b) correspondant à la position fermée de l'élément de toit arrière (1), sa concavité tournée vers l'avant du véhicule (10) pour le pivotement vers l'arrière dudit élément de toit arrière (1), et, à partir de son extrémité (24a) correspondant à la position escamotée (1a) de l'élément de toit arrière (1), sa concavité tournée vers l'arrière du véhicule (10) pour le pivotement vers l'avant dudit élément de toit arrière (1).

4. Système de toit selon la revendication 3, **caractérisé en ce que** les deux galets (23) sont portés par une saillie (25) s'étendant vers le bas à partir du bord inférieur (26) de l'élément de toit arrière (1).

5. Système de toit selon l'une quelconque des revendications précédentes, **caractérisé en ce que** le premier élément de toit avant (15) est articulé de chaque côté du véhicule selon un premier axe d'articulation (28) situé près du bord avant (5) de l'élément de toit arrière (1) et porté par un doigt (29) en saillie vers l'arrière du véhicule (10) par rapport au bord arrière (30) dudit élément de toit avant (15).

6. Système de toit selon la revendication 5, **caractérisé en ce que** chaque doigt (29) se prolonge au-delà dudit premier axe d'articulation (28) jusqu'à une extrémité arrière portant un second axe d'articulation (31) pour articuler ledit doigt (29) à l'extrémité supérieure (32a) d'un levier de commande (32).

7. Système de toit selon la revendication 6, **caractérisé en ce que** l'extrémité inférieure (32b) de chaque levier de commande (32) est articulée à une première extrémité (33a) d'un bras pivotant (33) monté de manière pivotante dans sa partie médiane autour d'un pivot (34) porté par l'élément de toit arrière (1).

8. Système de toit selon la revendication 7, **caractérisé en ce que** la seconde extrémité (33b) de chaque bras pivotant (33) porte un galet (39) coulissant dans une seconde glissière (40) portée par le châssis (12) du véhicule (10).

9. Système de toit selon la revendication 8 quand la revendication 5 est basée sur la revendication 3, le véhicule (10) étant du type à deux corps, **caractérisé en ce que** les deux glissières (24, 40) s'étendent d'une manière générale sensiblement en direction verticale.

10. Système de toit selon la revendication 8 quand la revendication 5 est basée sur la revendication 3, le véhicule (10) étant du type à trois corps, **caractérisé en ce que** les deux glissières (24, 40) s'étendent d'une manière générale selon une direction faisant un angle non nul avec l'horizontale.

11. Véhicule équipé du système de toit selon l'une quelconque des revendications précédentes.

## Claims

1. A retractable hard top roof system (11) for a convertible vehicle (10), the system (11) comprising:
- a rear roof element (1) mounted on the structure (12) of the vehicle (10) via guide means (24, 34, 39, 40, 44, 49, 50) arranged in such a manner that the rear roof element (1) is capable of being retracted into the rear trunk (6) of said vehicle (10) in a generally pivoting movement starting from its closed position above the cabin, said pivoting being from front rearwards during a first step and then from rear forwards during a second step until the retracted position (1a) in which said rear roof element (1) is stowed in a substantially horizontal position with its concave side facing downwards,
- and at least a first front roof element (15) hinged relative to said rear roof element (1),
- and control means (32, 33, 28, 29) for controlling pivoting of said first front roof element (15) relative to the rear roof element (1),
**characterized in that**
- the first front roof element (15) is hinged on the rear roof element (1), and
- the control means (32, 33, 28, 29) for controlling pivoting of said first front roof element (15) and the guide means (24, 34, 39, 40, 44, 49, 50) for guiding the rear roof element (1) are arranged in order to, in a coordinated manner:
- achieve a movement of the first front roof element (15) together with a movement of a rear roof element (1),
- and guide said first front roof element (15) along a predetermined path (16) to a retracted position (15a) in which the first front roof element (15) is stowed in a substantially vertical position behind the back seat (8) of the vehicle (10).

2. A roof system according to claim 1, **characterized in that** the guide means for guiding the rear roof element (1) are arranged in such a manner as to ensure that, in position (1a) stowed inside the rear trunk (6), said rear roof element (1) is at a maximum height (B1) above the floor (27) of the rear trunk (6), where (B1) is less than the height (B) of the bottom edge (26) of said rear roof element (1) when it is in its closed position.

3. A roof system according to any one of claims 1 or 2, **characterized in that** the rear roof element (1) carries on each side of the vehicle two wheels (23) mounted to slide in a common slideway (24) having, starting from its end (24b) corresponding to the closed position of the rear roof element (1), its concave side facing towards the front of the vehicle (10) for rearward pivoting of said rear roof element (1), and having, starting from its end (24a) corresponding to the retracted position (1a) of the rear roof element (1), its concave side facing towards the rear of the vehicle (10) for the forward pivoting of said rear roof element (1).

4. A roof system according to claim 3, **characterized in that** the two wheels (23) are carried by a projection (25) extending downwards from the bottom edge (26) of the rear roof element (1).

5. A roof system according to any one of the preceding claims, **characterized in that** the first front roof element (15) is hinged on either side of the vehicle about a first hinge axis (28) situated close to the front edge (5) of the rear roof element (1) and carried by a finger (29) projecting towards the rear of the vehicle (10) relative to the rear edge (30) of said front roof element (15).

6. A roof system according to claim 5, **characterized in that** each finger (29) extends beyond said first hinge axis (28) to a rear end carrying a second hinge axis (31) for hinging said finger (29) to the top end (32a) of a control lever (32).

7. A roof system according to claim 6, **characterized in that** the bottom end (32b) of each control lever (32) is hinged to a first end (33a) of a pivot arm (33) pivotally mounted in its middle portion about a pivot (34) carried by the rear roof element (1).

8. A roof system according to claim 7, **characterized in that** the second end (33b) of each pivot arm (33) carries a wheel (39) sliding in a second slideway (40) carried by the structure (12) of the vehicle (10).

9. A roof system according to claim 8 when claim 5 is based on claim 3, the vehicle (10) being of the two compartment type, **characterized in that** the two slideways (24, 40) extend generally in a substantially vertical direction.

10. A roof system according to claim 8 when claim 5 is based on claim 3, the vehicle (10) being of the three compartment type, **characterized in that** the two slideways (24, 40) extend generally in a direction that makes a non zero angle with the horizontal.

11. Vehicle equipped with the roof system according to any one of the preceding claims.

## Patentansprüche

1. System für ein versenkbares steifes Dach (11) für ein aufdeckbares Fahrzeug (10), wobei das System (11) umfasst:
- ein hinteres Dachelement (1), das auf dem Rahmen (12) des Fahrzeugs (10) mittels einer Führungseinrichtung (24, 34, 39, 40, 44, 49, 50) angebracht ist, die in der Weise angeordnet ist, dass sich das hintere Dachelement (1) in einer allgemeinen Schwenkbewegung, ausgehend von seiner geschlossenen Position oberhalb des Fahrgastraumes, in den hinteren Kofferraum (6) des Fahrzeugs (10) versenken kann, wobei diese Schwenkung in einem ersten Schritt von vorne nach hinten, dann in einem zweiten Schritt von hinten nach vorne erfolgt, bis in die versenkte Position (1a), in welcher das hintere Dachelement (1) in einer im Wesentlichen horizontalen Position angeordnet befindet, wobei seine Einwölbung nach unten gerichtet ist,
- und wenigstens ein erstes vorderes Dachelement (15), das in Bezug zu den hinteren Dachelement (1) angelenkt ist,
- und eine Steuereinrichtung (32, 33, 28, 29) für die Schwenkbewegung dieses ersten vorderen Dachelements (15) in Bezug zu dem hinteren Dachelement (1),
**dadurch gekennzeichnet, dass**
- das erste vordere Dachelement (15) auf dem hinteren Dachelement (1) angelenkt ist, und
- die Steuereinrichtung (32, 33, 28,29) der Schwenkbewegung des ersten vorderen Dachelements (15) und die Führungseinrichtung (24, 34, 39, 40, 44, 49, 50) des hinteren Dachelements (1) so angeordnet sind, dass sie in koordinierter Weise:
- eine Bewegung des ersten vorderen Dachelements (15) zusammen mit einer Bewegung des hinteren Dachelements (1) sicherstellen, und das erste vordere Dachelement (15) entlang einer vorbestimmten Bewegungsbahn (16) führen, bis in eine versenkte Position (15a), in welcher sich das erste vordere Dachelement (15) in einer im Wesentlichen vertikalen Position hinter dem Rücksitz (8) des Fahrzeugs (10) angeordnet befindet.

2. Dachsystem nach Anspruch 1, **dadurch gekennzeichnet, dass** die Führungseinrichtung des hinteren Dachelements (1) in der Weise angeordnet ist, dass sie sicherstellt, dass in der in das Innere des hinteren Kofferraumes (6) versenkten Position (1a) sich dieses hintere Dachelement (1) auf einer maximalen Höhe (B 1) über dem Boden (27) des hinteren Kofferraumes (6), unterhalb der Höhe (B) des unteren Randes (26) des hinteren Dachelements befindet, wenn es sich in seiner geschlossenen Position befindet.

3. Dachsystem nach einem der Ansprüche 1 oder 2, **dadurch gekennzeichnet, dass** das hintere Dachelement (1) an jeder Seite des Fahrzeugs zwei Rollen (23) trägt, die verschiebbar in ein und derselben Gleitschiene (24) angebracht sind, die ausgehend von ihrem Ende (24b), das der geschlossenen Position des hinteren Dachelements (1) entspricht, für die Schwenkbewegung nach hinten des hinteren Dachelements (1) mit ihrer Vertiefung zur Vorderseite des Fahrzeugs (10) gerichtet ist, und ausgehend von ihrem Ende (24a), das der versenkten Position (1a) des hinteren Dachelements (1) entspricht, für die Schwenkbewegung nach vorne des hinteren Dachelements (1) mit ihrer Vertiefung zur Heckseite des Fahrzeugs (10) gerichtet ist.

4. Dachsystem nach Anspruch 3, **dadurch gekennzeichnet, dass** die zwei Rollen (23) durch einen Ansatz (25) getragen werden, der sich ausgehend vom unteren Rand (26) des hinteren Dachelements (1) nach unten erstreckt.

5. Dachsystem nach einem der vorhergehenden Ansprüche, **dadurch gekennzeichnet, dass** das erste vordere Dachelement (15) an jeder Seite des Fahrzeugs entlang einer ersten Gelenkachse (28) angelenkt ist, die nahe der Vorderkante (5) des hinteren Dachelements (1) angeordnet ist und durch einen Zapfen (29) getragen wird, der zur Heckseite des Fahrzeugs (10) in Bezug zur Hinterkante (30) des vorderen Dachelements (15) absteht.

6. Dachsystem nach Anspruch 5, **dadurch gekennzeichnet, dass** sich jeder Zapfen (29) über die erste Gelenkachse (28) bis zur einem hinteren Ende verlängert, das eine zweite Gelenkachse (31) trägt, um den Zapfen (29) an dem oberen Ende (32a) eines Steuerhebels (32) anzulenken.

7. Dachsystem nach Anspruch 6, **dadurch gekennzeichnet, dass** das untere Ende (32b) jedes Steuerhebels (32) an einem ersten Ende (33a) eines Schwenkarmes (33) angelenkt ist, der in seinem Mittelbereich um ein Gelenk (34) schwenkbar angebracht ist, das durch das hintere Dachelement (1) getragen wird.

8. Dachsystem nach Anspruch 7, **dadurch gekennzeichnet, dass** das zweite Ende (33b) jedes Schwenkarmes (33) eine Rolle (39) trägt, die in einer zweiten Gleitschiene (40) verschiebbar ist, die durch den Rahmen (12) des Fahrzeugs (10) getragen wird.

9. Dachsystem nach Anspruch 8, wenn der Anspruch 5 auf Anspruch 3 basiert, wobei das Fahrzeug (10) in der Bauweise mit zwei Körpern vorliegt, **dadurch gekennzeichnet, dass** sich die beiden Gleitschienen (24, 40) in einer im Wesentlichen vertikalen Richtung erstrecken.

10. Dachsystem nach Anspruch 8, wenn der Anspruch 5 auf Anspruch 3 basiert, **dadurch gekennzeichnet, dass** sich die beiden Gleitschienen (24, 40) im Wesentlichen in einer Richtung erstrecken, die einen Winkel ungleich Null mit der Horizontalen bildet.

11. Fahrzeug, ausgestattet mit dem Dachsystem nach einem der vorhergehenden Ansprüche.
